(19) Europäisches Patentamt
European Patent Office
Office européen des brevets

(11) **EP 2 816 510 A1**

(12) **EUROPEAN PATENT APPLICATION**

(43) Date of publication:
**24.12.2014 Bulletin 2014/52**

(51) Int Cl.:
***G06Q 10/02*** *(2012.01)*

(21) Application number: **13290146.3**

(22) Date of filing: **20.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Amadeus S.A.S.
06410 Biot (FR)**

(72) Inventors:
• **Bornat, Frans
06160 Juan les Pins (FR)**
• **Armand, Maxime
06600 Antibes (FR)**
• **Ambolet, Patrice
06560 Valbonne (FR)**
• **Choubert, Luc
06410 Biot (FR)**
• **Piscina, Christel
06200 Nice (FR)**

(74) Representative: **Samson & Partner
Widenmayerstraße 5
80538 München (DE)**

(54) **Travel booking inventory management**

(57)    Methods, systems, and computer program products for managing the booking of travel inventory items at an inventory system. A booking request for a type of travel inventory item managed by the inventory system may be received at the inventory system. An expiration time may be determined based at least in part on the booking request, and a travel booking for a travel inventory item of the type may be confirmed based at least in part on the booking request. The inventory system may be updated based on the booked travel inventory item.

FIG. 1

EP 2 816 510 A1

**Description**

BACKGROUND

The invention is generally related to computers and computer software, and in particular to methods, systems, and computer program products for managing travel booking inventory.

Computer technology is increasingly used in the travel industry to manage and support travel reservations, as well as data associated therewith. In particular, reservation agents (i.e., travel agencies) increasingly book travel by remotely interfacing with a reservation system that in turn interfaces with inventory systems of one or more travel merchants (e.g., airlines, rail travel providers, bus travel providers, etc.) to book one or more travel inventory items from the one or more travel merchants. In general, a travel inventory item refers to a unit or item from a saleable inventory of a travel merchant. For example, a travel inventory item of an airline may refer to a place on a flight, but generally does not refer to a specific physical seat on the flight-date. In general, the flight-date may be considered to be a particular flight between an origin and destination that occurs on a particular travel date. Moreover, each inventory system for each travel merchant generally manages travel inventory items for the particular travel merchant. For example, for an airline, the inventory system may maintain the availability and booking of places on each flight-date provided by the airline.

In conventional systems, a reservation agent creates and/or modifies a Passenger Name Record (PNR) with a travel reservation device (e.g., a terminal used by a travel agent) to initialize a reservation session with the reservation system and thereby book travel for a travel customer associated with the PNR. The reservation system retrieves the PNR and initializes an inventory session with each inventory system of a travel merchant for which a travel inventory item is to be booked.

During the booking of a travel inventory item, the inventory system of a travel merchant is updated to reflect the booking of the travel inventory item so that double booking of travel inventory items for the travel merchant is not possible. However, in some conventional reservation systems and inventory systems, while the travel inventory item is booked for the travel booking, the reservation agent may not immediately finalize the travel booking. Such pending travel bookings are generally referred to as uncommitted bookings, and these uncommitted bookings may lead to inaccurate inventories of travel inventory items for travel merchants. Finalizing a travel booking generally refers to completing the travel booking (referred to as committing the travel booking), canceling the uncommitted travel booking, ignoring the uncommitted travel booking (i.e., not committing), and timing out of the uncommitted travel booking. In conventional systems, a time out occurs if the reservation session has not been updated within a time limit. If the travel booking is committed and ticketed, payment is collected for the travel booking. If the uncommitted booking is ignored or times out, the inventory system updates to reflect the availability of the previously booked travel inventory item.

Some reservation agents may artificially expand the lifetime of a reservation session of a conventional system and thereby hold travel inventory items in uncommitted bookings for potential benefit to the reservation agent. For example, some reservation agents may intentionally manipulate the interaction between a conventional reservation system and one or more conventional inventory systems to reduce the number of available travel inventory items for a travel merchant, leave a favorably priced uncommitted travel booking open for an indefinite period of time by refreshing the uncommitted travel booking, cancel and rebook uncommitted bookings to maintain a favorable price for a travel booking (referred to as "Churning"), and/or other actions. Such actions, while potentially desirable for a reservation agent, generally lead to loss of revenues for travel merchants, as the travel inventory items held by the uncommitted bookings may never be returned to availability until a time when there are no other sale opportunities.

Consequently, a need exists in the art for improved inventory systems for travel merchants, as well as methods and computer program products for managing inventory systems for travel merchants.

BRIEF SUMMARY

Embodiments of the invention generally comprise a method, system, and computer program product for managing the booking of travel inventory items managed by an inventory system. A booking request for a type of travel inventory item is received at the inventory system, and an expiration time based at least in part on the booking request is determined. A travel booking for the travel inventory item having the expiration time is confirmed, and the inventory system is updated based on the confirmed booking of the travel inventory item. Therefore, in embodiments of the invention, a travel booking generally includes an expiration time based at least in part on the booking request, where the expiration time may be determined to discourage undesired actions by reservation agents and prevent these agents from keeping the booking for an indefinite amount of time.

BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a block diagram of a reservation system, travel reservation device, and one or more inventory systems consistent with embodiments of the invention.

FIG. 2 is a block diagram of an inventory system of FIG. 1.

FIG. 3A is a diagrammatic illustration of an example function that may be utilized by the inventory system of FIG. 2.

FIG. 3B is a diagrammatic illustration of an example function that may be utilized by the inventory system of FIG. 2.

FIG. 3C is a diagrammatic illustration of an example function that may be utilized by the inventory system of FIG. 2.

FIG. 4 is a block diagram of the travel reservation device of FIG. 1.

FIG. 5 is a flowchart illustrating a sequence of operations that may be performed by the inventory system of FIG. 2 to confirm a travel booking.

FIG. 6 is a flowchart illustrating a sequence of operations that may be performed by the inventory system of FIG. 2 to finalize a travel booking.

FIG. 7 is a block diagram of a logical structure of data that may be stored in the inventory system of FIG. 2.

FIG. 8 is a block diagram of a logical structure of data that may be stored in the inventory system of FIG. 2.

FIG. 9 is a flowchart illustrating a sequence of operations that may be performed by the inventory system of FIG. 2 to retrieve booking activity data.

FIG. 10 is an example routine in the form of a sequence diagram that may be performed by the reservation system, reservation device, and at least one inventory system of FIG. 1.

FIG. 11 is a diagrammatic view of an example output on a display of the travel reservation device of FIG. 4.

FIG. 12 is an example routine in the form of a sequence diagram that may be performed by the reservation system, reservation device, and at least one inventory system of FIG. 1.

FIG. 13 is a diagrammatic view of an example output on a display of the travel reservation device of FIG. 4.

## DETAILED DESCRIPTION

Embodiments of the invention manage travel inventory item bookings at an inventory system by determining an expiration time to associate with each travel booking. In some embodiments the expiration time may be determined based at least in part on a booking request for a travel inventory item. For example, the expiration time may be determined based at least in part on a reservation agent profile from which the booking request for the travel inventory item originates. In addition, the expiration time may be determined based at least in part on booking activity for related travel inventory items managed by the inventory system. Hence, expiration times associated with travel bookings may be different depending on the reservation agent profile and/or flight-date of the booking request. In addition, other factors, including for example availability for a type of travel inventory item, time until departure of the type of travel inventory item, identity of the travel customer, and/or other such factors may be considered by the inventory system when determining the expiration time for a travel booking.

In some embodiments of the invention, the inventory system may monitor booking activity of reservation agents by collecting data for each booking transaction of the reservation agent in a reservation agent profile. Moreover, the collected data may be analyzed to determine one or more booking statistics associated with the reservation agent profile. For example, the inventory system may analyze the booking activity of a particular reservation agent profile to determine a commit rate associated with the reservation agent profile, where such commit rate corresponds to the quantity of booked travel inventory items that are committed relative to the total quantity of booked travel inventory items. In embodiments of the invention, the expiration time determined for a booking request of a particular reservation agent profile may be based at least in part on the booking statistic for the particular travel agent profile. As such, in these embodiments, if the booking statistic for a particular reservation agent profile indicates that the reservation agent may be attempting to manipulate the inventory system through undesirable actions, a travel booking for the reservation agent may include an expiration time that is less in duration than a standard expiration time generally determined for travel bookings from the inventory system. Similarly, if collected data for a particular reservation agent profile indicates that the reservation agent corresponds to a high revenue source for the travel merchant, the expiration time for travel bookings of the particular reservation agent profile may be greater in duration than a standard expiration time generally determined for travel bookings from the inventory system.

Similarly, in some embodiments of the invention, the inventory system may monitor booking activity for a flight-date by collecting data for each booking transaction for the flight-date, and the inventory system may analyze the collected data to determine one or more booking statistics associated with the flight-date. For example, the inventory system may analyze the booking activity for a particular flight-date to determine a commit rate associated with the flight-date, where such commit rate may correspond to the quantity of booked travel inventory items for the flight-date that are committed relative to the total quantity of booked travel inventory items. In these embodiments, an expiration time for a travel booking for the particular flight-date may be based at least in part on the collected data and/or one or more booking statistics associated with the particular flight-date. As such, if one or more reservation agents are attempting to manipulate inventory for a particular flight-date, the expiration time associated with travel bookings for such particular flight-date may be determined accordingly.

Therefore, embodiments of the invention may determine an expiration time for a travel booking based at least in part on a reservation agent profile and/or flight-date associated with the travel booking. When a travel booking expires (i.e., the expiration time elapses), the travel booking may not be committed, and one or more travel inventory items of the travel booking become available in one or more corresponding inventory systems, thereby reducing the quantity of travel inventory items that may be reserved for uncommitted travel bookings as compared to conventional inventory systems. As such, an inventory system consistent with embodiments of the invention may determine expiration times for travel bookings to thereby reduce undesired booking activity by one or more reservation agents and/or reduce undesired booking activity for a particular flight-date as compared to conventional inventory systems.

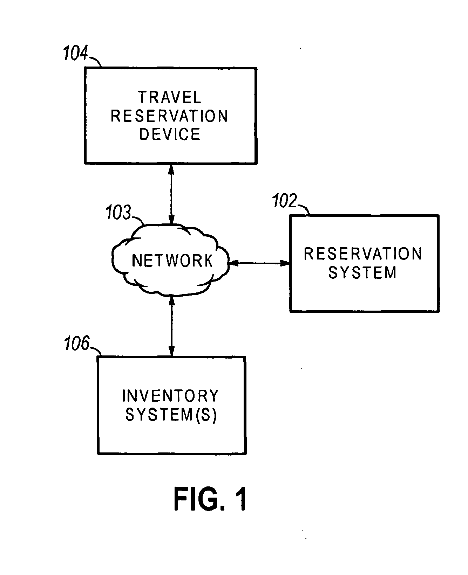

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency or other such travel reservation service) may initialize a reservation session with the reservation system 102 to communicate a booking request and/or other such relevant data to the reservation system 102. The travel reservation device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent may interface with the reservation system 102 using the travel reservation device 104 in a reservation session to providedata for a booking request. In turn, the reservation system interfaces with each inventory system 106 of each travel merchant that provides a travel inventory item needed for the booking request in an inventory session.

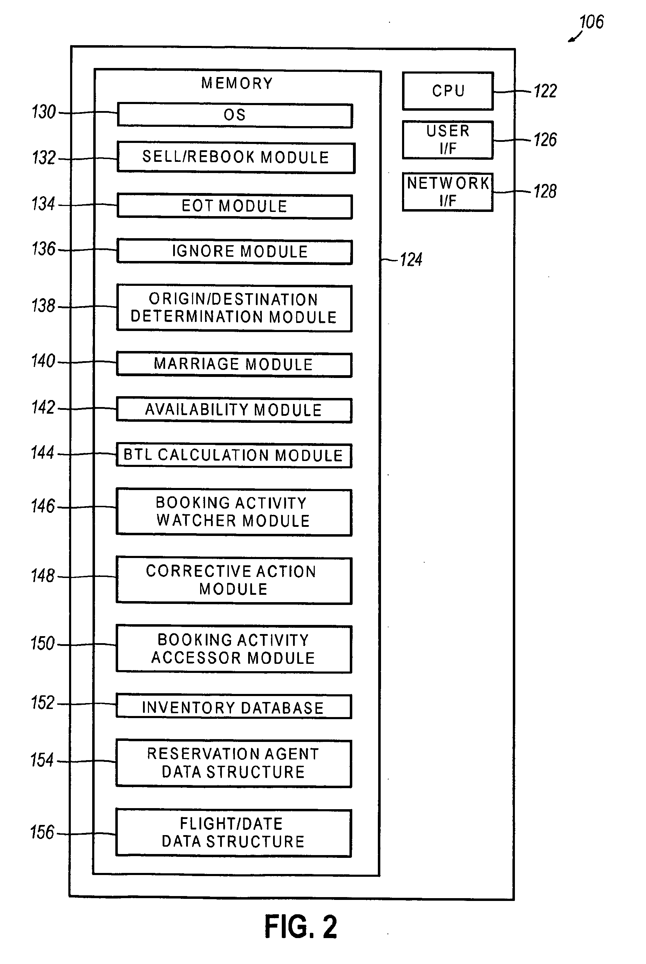

FIG. 2 provides a block diagram that illustrates the components of the one or more servers of an inventory system 106 consistent with embodiments of the invention. The inventory system 106 includes at least one processor 122 including at least one hardware-based microprocessor and a memory 124 coupled to the at least one processor 122. The memory 124 may represent the random access memory (RAM) devices comprising the main storage of inventory system 106, as well as any supplemental levels of memory, e.g., cache memories, non-volatile or backup memories (e.g., programmable or flash memories), read-only memories, etc. In addition, memory 124 may be considered to include memory storage physically located elsewhere in the travel and inventory system 106, e.g., any cache memory in a microprocessor, as well as any storage capacity used as a virtual memory, e.g., as stored on a mass storage device or on another computer coupled to the travel and inventory system 106.

For interface with a user or operator, the inventory system 106 may include a user interface 126 incorporating one or more user input/output devices, e.g., a keyboard, a pointing device, a display, a printer, etc. Otherwise, input may be received via another computer or terminal (e.g., the travel reservation device 104 and/or the reservation system 102) over a network interface 128 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 130 and executes or otherwise relies upon various computer software applications, components, programs, objects, modules, data structures, etc., including for example, a sell/rebook module 132, an end-of-transaction (EOT) module 134, an ignore module 136, an origin/destination module 138, a marriage module 140, an availability module 142, a booking time to live (BTL) calculation module 144, a booking activity watcher module 146, a corrective action module 148, and/or a booking activity interface accessor module 150.

The memory 124 of the inventory system may generally store one or more databases including for example, an inventory database 152.Each database 152may include data and supporting data structures that store and organize the data. In particular, each database 152 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 152 in response to a query. The inventory database 152 generally stores inventory data corresponding to travel inventory items of a travel merchant that the inventory system 106 is configured to manage. The inventory data that may be stored in the inventory database 152, may include available travel inventory items, uncommitted booked travel inventory items, committed booked travel inventory items, a load factor for a group/type of travel inventory items (e.g., the number of booked seats on a flight-date for a cabin compared to the total number of seats on the flight-date for the cabin), time to departure for each type of travel inventory item, and/or other such information.

Moreover, the memory 124 may generally store one or more data structures including for example a reservation agent data structure 154 and/or a flight-date data structure 156. The reservation agent data structure 154 may store collected data for booking transactions, where the collected data is organized by reservation agent. For example, the reservation agent data structure 154 may store collected data for each reservation agent by an International Air Transport Association (IATA) number associated with the reservation agent. The flight-date data structure 156 may store collected data for booking transactions, where the collected data is organized by flight-date.

In general, the modules 132-150 may be executing on the inventory system 106, and the modules may cause the processor to perform operations consistent with embodiments of the invention. The sell/rebook module 132 may be configured to analyze a received booking request, and determine a travel inventory item for the booking request by communicating with the origin/destination module 138, the marriage module 140, and/or the availability module 142. Consistent with embodiments of the invention, the BTL calculation module 144 may be configured to determine an expiration time based at least in part on the received booking request. The origin/destination module 138 computes the itinerary of each passenger based on the content of each booking request received by the sell/rebook module 132. The marriage module 140 applies protection logic to flight-date segments that have been sold in a bundle origin and destination. The availability module 142 may query the inventory database 152 to determine travel inventory item availability.

The booking activity accessor module 150 may be configured to read and/or write data to the reservation agent data structure 154 and the flight-date data structure 156. For example, the booking activity accessor module 150 may store information to the reservation agent data structure 154 and/or flight-date data structure identifying: a booked travel inventory item (e.g., a flight number, date, board-off points, class, cabin), an action requested (e.g., sell, cancel, commit, ignore, etc.), an originator (e.g., the information for the reservation agent), availability (e.g., inventory availability before and after an action), result of the action (e.g., successful, rejected, etc.). Similarly, key data may be input into the booking activity accessor module 150 to retrieve booking activity data corresponding to the key data from one of the data structures 154, 156 from the booking activity accessor module 150. For example, an identifier of a reservation agent profile may be input into the booking activity accessor module 150, and the booking activity accessor module 150 may output booking activity data corresponding to the reservation agent profile stored in the reservation agent data structure. As another example, the flight-date may be input into the booking activity accessor module 150, and the booking activity accessor module 150 may output booking activity data corresponding to the flight-date stored in the flight-date data structure 156.

In some embodiments, the booking activity watcher module 146 may be configured to analyze booking activity data read by the booking activity accessor module 150 to determine one or more booking statistics for the reservation agent profile and/or flight-date of the booking request, and the expiration time may be determined based at least in part on the one or more booking statistics. In addition, the booking activity watcher module 146 may be configured to analyze inventory data and determine one or more inventory statistics based thereon, and determining the expiration time may be based at least in part on the provided inventory data. In some embodiments, the booking activity watcher module 146 may analyze traveler data included in the PNR of the booking request, and the expiration time may be based at least in part on the traveler data. Moreover, a travel merchant may define business rules and/or standard values that the BTL calculation module 144 may utilize in determining an expiration time for a travel booking. For example, the travel merchant may define a standard expiration time, and based on booking activity data, inventory data, and/or other such data the BTL calculation module 144 may determine an expiration time.

A travel merchant may define a weight for a type of data relative to other types of data at which such data may be factored when determining the expiration time. For example, an airline may indicate that inventory data may be of less weight compared to other types of data when bookings for a flight-date is lower than twenty percent of full capacity, and the airline may indicate that the inventory data may be of greater weight compared to other types of data when bookings for the flight-date cabin exceed eighty percent of full capacity. In general, the weight factors may be defined by the travel merchant. In this example, as the cabin occupancy indicated in the inventory data of the flight-date increases, the load factor may cause the length of the expiration time to decrease in a defined relationship, where the relationship may be defined by the travel merchant.

Furthermore, booking activity data may be accorded different weights in determining the expiration time based at least in part on an age associated with actions recorded in the booking activity data. For example, if the booking activity data and/or reservation agent profile indicates that a reservation agent has committed and canceled a travel booking approximately a minute previous to submitting another booking request to rebook the travel booking, the determined expiration time may be more heavily based on this action because of the age of the action and the relation of the action to an identified type of undesired behavior (i.e., churning). In this example, the BTL calculation module may determine a shorter expiration time as compared to a standard expiration time to prevent repeated canceling and rebooking and may even deny the booking request.

The booking activity watcher module 146 may collect data for booking activity, and the booking activity accessor module 150 may store the collected data in the reservation agent data structure 154 and/or flight-date data structure 156. In general, the booking activity watcher module 146 monitors incoming booking activity to collect booking activity data for actions being performed by the inventory system 106. The collected data includes, for example, an identifier corresponding to a particular reservation agent profile for a booking request, information about one or more requested travel inventory items (e.g., an identifier of the requesting reservation agent, flight-date, requested action, origin/destination), inventory information for travel inventory items, and/or the result of the action.

As discussed above, a travel merchant may define a standard expiration time, which may be referred to as a session time to live (STL), which corresponds to a default expiration time for an inventory session. The value of STL value may be defined either by the travel merchant via, for example, a business rule or may be alternatively defined by the reservation system. STL represents an absolute time limit (e.g., two or three hours) for each session by a travel agent. The establishment of a STL differs from conventional travel agent sessions that lack any time limit.

The expiration time for travel bookings, which may be referred to as a booking time to live (BTL) may be computed based at least in part on the STL. In general, a BTL will correspond to one or more travel bookings of a travel solution - i.e., if a travel solution between an origin and a destination comprises a plurality of flights, a calculated BTL would apply to all travel bookings of the travel solution. Furthermore, the BTL calculated for each of the bookings of the travel solution may be based on a particular BTL related to a particular booking of the travel solution. For example, the BTL calculated for each booking of the solution may be the minimum BTL for a particular booking of the travel solution (i.e., $BTL_{Solution} = min(BTL_{All\ Bookings})$; as another example, the BTL calculated for each booking of the solution may be the maximum BTL for a particular booking of the travel solution (i.e., $BTL_{Solution} = max(BTL_{All\ Bookings})$. As such, in these embodiments, the BTL for a first booking of a travel solution may be adjusted in response to selling a second booking for the travel solution such that the BTL for all bookings of a travel solution may be equal. Such adjustment of the BTL for each booking of a travel solution may be referred to as origin and destination harmonization. In a representative embodiment, a BTL factor 'α' may be determined that defines the BTL as a fraction of the STL ranging from zero to unity with an upper limit that BTL and STL are equal if the BTL factor exceeds unity and a lower limit on BTL of zero if the BTL factor is less than zero. In this representative embodiment, the BTL may be calculated as follows:

For $0 \le \alpha \le$ **1,BTL** = $\alpha \cdot$ **STL**
For $\alpha <$ **0,BTL = 0** (the sell/booking is denied)
For $\alpha >$ **1** , BTL=STL

where

$$\alpha = \frac{\Sigma n_x \cdot y_x}{\Sigma n_x}$$

In this example, $n_x$ corresponds to the weight related to the data type $x$, where the weight may be defined by the travel merchant (e.g., by business rule)for each data type. In general, the weight provides a measure of the relative importance of the data type to the BTL calculation. In addition, the travel merchant may define a function $y_x$ for each data type to determine a criteria value, and $x$ is a raw value (i.e., booking/inventory statistic) of the data type (e.g., commit rate, fraud rate, load factor, occupancy rate, etc.). Raw data values $x$ may be determined based on the various retrieved data (e.g., booking activity data, inventory data, passenger data, revenue data, etc.). As shown in the example, the impact of each type of data depends on the defined weight $n_x$. Moreover, the travel merchant may define criteria values to be utilized for each type of data, for example, the travel merchant may define $y_x$ for one or more raw data values of $x$, and the BTL calculation module 144 may determine the BTL based at least in part on such predefined values. Alternatively, the travel merchant may define a function $y_x$ from which the BTL calculation module 144 may determine the criteria values using the function.

In some embodiments of the invention, by determining the expiration time of a travel booking based at least in part on a reservation agent associated with the booking request, a travel merchant may provide one or more business rules that cause different expiration times to be determined for different reservation agents. For example, a business rule of a travel merchant may identify a reservation agent and provide an expiration time for the identified reservation agent. In this example, a business rule for the identified reservation agent effectively bypasses calculating a BTL based on one or more other factors described herein. For example, an airline may provide a booking rule that identifies an affiliated reservation agent, and the booking rule may provide an expiration time that exceeds even the standard expiration time. As another example, an airline may provide a booking rule that identifies a reservation agent that is believed to engage in undesired booking practices, and the booking rule may provide that the expiration time for the reservation agent is effectively zero, thereby preventing travel bookings by the reservation agent.

In addition, the BTL calculation module 144 may determine the BTL based at least in part on the travel customer identified in the PNR associated with the booking request. For example, the PNR may identify a frequent traveler ranking associated with the travel customer (e.g., silver, gold, platinum frequent flyer, etc.). The ranking associated with the travel customer may cause the BTL calculation module to increase the calculated BTL, because a booking request for a frequent traveler generally indicates a higher likelihood of committing a travel booking based thereon. For example, if a PNR associated with a booking request identifies the travel customer as a frequent flyer for a particular airline, a business rule provided by the airline may indicate that booking requests for frequent flyer travelers may be considered as a criteria in determining the BTL, and/or that a predefined amount of additional time should be added to a determined BTL.

As discussed previously, booking activity data stored in the reservation agent data structure 154 and/or flight-date data structure 156 may be analyzed by the BTL calculation module 144 to determine one or more booking statistics (i.e., raw values) from which one or more criteria values that may be used in determining the BTL. For example, the BTL calculation module 144 may determine a commit rate raw value ($x_{CR}$) as:

$$x_{CR} = \frac{N_T}{N_C}$$

Where $N_T$ corresponds to the number of bookings during a certain time slot and $N_C$ corresponds to the number of created bookings during the time slot, including all bookings created on the observed flight-date.

Similarly, a fraud rate raw value may be determined based at least in part on the number of bookings confirmed but not committed (i.e., canceled or ignored), existence time of the bookings, time proximity in creation of the booking with the current time (coefficient stronger for recent bookings, such that recent bookings affect the raw value more), and/or the time duration between two or more sessions. Hence, the fraud rate may be based at least in part on the concentration of similar uncommitted bookings and/or the proximity in time between a previous attempt to book and a current attempt to book. To determine a fraud rate, the number of similar sell attempts rejected for the similar reasons may be analyzed for a particular reservation agent and/or particular flight-date.

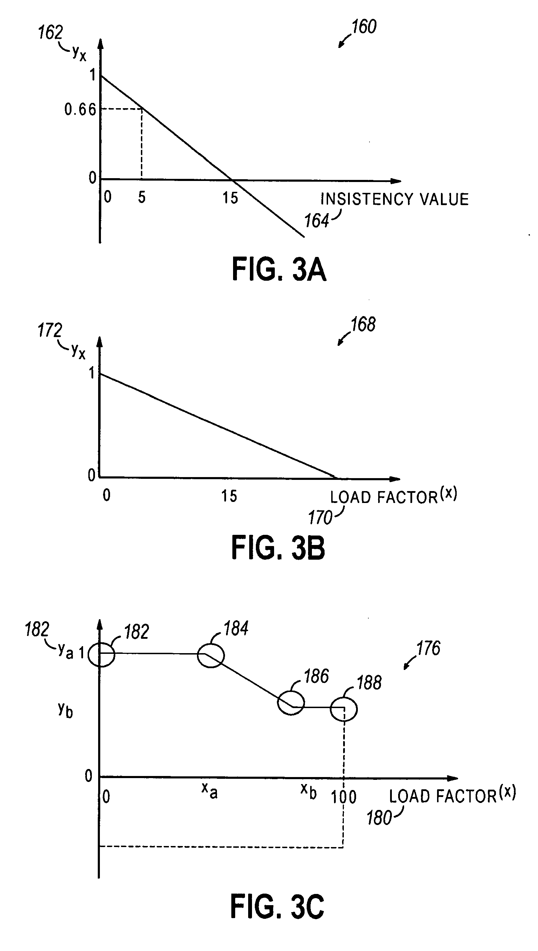

For example, if a travel agent of a reservation agent attempts to sell (i.e., book) the same flight, and the travel agent is rejected for no availability, the weight placed on the actions in determining the raw value may be defined by the airline as follows: 1 attempt in the past 30 seconds is accorded a weight of 1; 20 attempts in the past 45 minutes is accorded a weight of 0.2. In this example, the raw value computed may be considered an insistency value, and the computed raw value for the example would be *Insistency value* = $(1 \times 1) + (20 \times 0.2) = 5$. The airline may further define a function for the insistency value to determine a criteria value $y_x$ for use in calculating a BTL. Fig. 3A provides a diagrammatic illustration 160 that provides the relationship between the criteria value $y_x$ 162 and the insistency value 164. As shown, for an insistency value of 5, the BTL calculation module 144 using the provided example relationship would determine the criteria value $y_x$ to be 0.66.

One outcome associated with undesirable booking activity is the unavailability of types of travel inventory items (e.g., seats on a flight, seats of a certain class, etc.). As such, in some embodiments, the BTL calculation module may determine one or more raw values corresponding to availability statistics based on inventory data retrieved from the inventory database 152. For example, the BTL calculation module 144 may determine a raw value corresponding to occupancy rate ($x_{OR}$) as:

$$x_{OR} = \frac{N_{ClassAVL}}{N_{ClassAVL} + N_{BOOKINGS}}$$

Where $N_{ClassAVL}$ corresponds to the availability of a booking class on which a booking request is being evaluated, and $N_{BOOKINGS}$ corresponds to the number of bookings created on the booking class. Similarly, load factor may be a data type and be determined for the entire type of travel inventory item (e.g., a flight-date cabin) as opposed to a class, where the load factor generally indicates the availability of a type of travel inventory item as a percentage. A departure closeness rate may be determined based at least in part on the time before departure of a travel inventory item and/or the maximum time for which the travel inventory item may be sold.

In addition, a raw value associated with revenue for a particular type of travel inventory item may be utilized in calculating the BTL. For example, if a particular flight-date or flights with particular origins/destinations generate higher revenue for an airline, then the airline may provide a business rule that causes the BTL to be increased for the flight-date and/or flights. In this example, the business rule may define an availability statistic associated with revenue that the BTL calculation module 144 utilizes in determining the BTL, or the business rule may identify high revenue flight-date and provide an amount of time to add to the calculated BTL or a default BTL for such identified high revenue flight-date/flights. Furthermore the inventory system 106 may retrieve competition data that includes information corresponding to competing travel merchants' prices for similar travel inventory items. The BTL calculation module may determine an availability statistic based at least in part on the competition data, and the BTL may be calculated based at least in part on such competition data. For example, if an airline retrieves competition data for similar flights provided by a competing airline that indicates that similar flights of the competing airline are generally priced higher, the expiration time determined for a travel booking of the airline's flights may be reduced in duration to encourage reservation agents to commit travel bookings for the flights more quickly.

As discussed, a travel merchant may define a relationship between a raw value $x$ and a criteria value $y_x$. For example, FIG. 3B provides a diagrammatic illustration 170 of an example linear function that may be defined by a business rule provided by a travel merchant. In this example, the raw value $x$ corresponds to load factor 170 for a type of travel inventory item, and the criteria value $y_x$ 172 may be determined using the example linear function based on the load factor 170. As shown, in this example, the criteria value $y_x$ decreases as the load factor increases, hence the BTL may decrease as the load factor increases.

FIG. 3C provides a diagrammatic illustration 176 of an alternative example function that may be utilized by the BTL calculation module 144 to determine a criteria value $y_x$ based on load factor. In contrast to the example provided in 3B, in this example, the travel merchant defined criteria values 182-188 (i.e., $Y_a$ and $Y_b$) for given values of the load factor $x$ (i.e., 0, $X_a$, $X_b$, and 100). Based on such defined criteria values 182-188, the BTL calculation module 144 may determine criteria values $y_x$ for other values of the load factor. As shown, the defined criteria values 182-188 indicate a relationship between the criteria value $y_x$ and the load factor $x$ as follows:

$$0 \leq x < X_a, \, y(x) = 1$$

$$X_a \leq x \leq X_b, \, y(x) = \frac{Y_b - Y_a}{X_b - X_a} \cdot x + \frac{Y_a \cdot X_b - X_a \cdot Y_b}{X_b - X_a}$$

$$X_b < x \leq 100, \, y(x) = Y_b$$

As illustrated and described, in this example, the criteria value $y_x$ as defined by the travel merchant and based on the load factor $x$, remains at unity (i.e., 1) until the load factor crosses a point defined by the travel merchant (i.e., $X_a$). Between $X_a$ and $X_b$, the BTL calculation module 144 may extrapolate a relationship based on the defined criteria values $Y_a$, $Y_b$ and the corresponding load factor raw values $X_a$ and $X_b$, which in this example is a linear function between $X_a$ and $X_b$.

As a further example, if a travel merchant provided with a business rule that only previous actions affect the determination of an expiration time, and the rule provides that if a reservation agent is associated with four rejections in a two minute window, the weight accorded to the previous action is zero (i.e., $n_x = 0$). If a reservation agent attempts to rebook a travel booking for the same type of travel inventory item 5 times in two minutes, the determined expiration time would be zero, and the transaction would be denied. In this example, only previous actions are considered, and the weight of the previous actions is set to zero due to the repeated actions; hence $\alpha = 0$ and therefore, the BTL would be zero.

In a similar example, if an inventory system 106 of an airline indicates that a flight-date for the airline currently has 20 authorized bookings on a particular booking class, where 19 bookings are current, including 12 committed and 7 in session. In this example, a business rule for the airline provides that booking class pressure and one or more booking statistics corresponding to a reservation agent are considered in computing the BTL and both factors are given equal weight. Furthermore, a first reservation agent (Agent 1) is currently working on 3 bookings in one session, and a second reservation agent (Agent 2) is currently working on 3 other bookings in another session. The booking class pressure may be computed based on inventory data to be 0.4. However, based on booking statistics associated each reservation agent, the criteria value for Agent 1 is determined to be 1.2, while the criteria value for Agent 2 is determined to be 0.7. Hence, due to the difference in criteria value between the agents, the BTL computed for each agent will differ. Taking the example values provided above, the $\alpha$ values may be determined as follows:

$$\alpha(\text{Agent 1}) = \frac{10 * 1.2 + 10 * 0.4}{20} = 0.8$$

$$\alpha(\text{Agent 2}) = \frac{10 * 0.7 + 10 * 0.4}{20} = 0.55$$

Therefore, as illustrated in the example, the previous actions of reservation agents may lead to different expiration times for the same travel bookings.

The EOT module 134 and the ignore module 136 may be configured to cause the processor to perform different operations depending on a finalization transaction received from the reservation system 102 for a particular travel booking confirmed by the inventory system 106. The EOT module 134 may be configured to commit and/or cancel a travel booking based on data received from the reservation system 102. Moreover, the corrective action module 148 may be configured to cancel an expired travel booking even if the reservation system 102 communicates a commit transaction to the inventory system 106. The ignore module 136 may be configured to cancel an ignored travel booking responsive to receiving an ignore transaction from the reservation system 102. Furthermore, the booking activity watcher module 146 may be configured to collect data from the EOT module 134 and/or the ignore module 136 corresponding to the booking activity, and the booking activity accessor module 150 may store the collected data in the reservation agent data structure 154 and/or the flight-date data structure 156.

The corrective action module 148 may be configured to control actions on the inventory system 106. In particular, the corrective action module 148 determines whether a travel booking may be committed based at least in part on whether the travel booking has not expired. If the travel booking expired, the corrective action module 148 may reset any booked travel inventory items to available and deny a commit transaction received from the reservation system 102 such that the travel booking is.

The travel reservation device 104 typically operates under the control of an operating system and/or application and executes or otherwise relies upon various computer software applications, components, programs, objects, modules, data structures, etc., including for example, a reservation application 198. The reservation application 198 may be executed by the processor 190 of the travel reservation device 104 to interface with an operator (e.g., a travel agent) via the user interface 194 such that booking data may be input for reserving a travel booking. The reservation application 198 may cause the input booking data to be communicated to the reservation system 102 such that a travel booking may be reserved based on the booking data. As such, in general, the reservation application 198 executes on the travel reservation device 104 to generate a front end through which a travel agent may interface with the reservation system 102, which in turn interfaces with one or more inventory systems 106 to reserve a travel booking for a travel customer. For example, the travel reservation device 104 executing the reservation application 198 may operate as a remote terminal connected to reservation system 102, and a travel agent may reserve a travel booking for a travel customer by interfacing with the reservation system 102 using the travel reservation device 104. For example, the travel reservation device 104 executing the reservation application 198 may provide a command line interface (e.g., cryptic interface) to a global distribution system (GDS) embodied by the reservation system 102. In this example, the booking data communicated by the travel reservation device 104 may be in a travel agency format, such as cryptic.

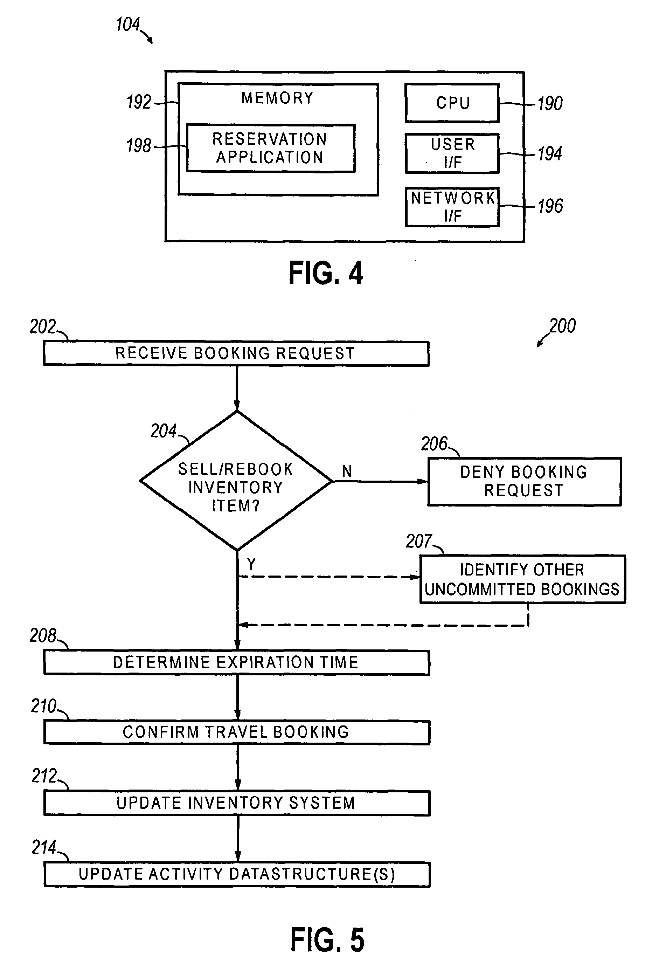

FIG. 5 provides a flowchart 200 that illustrates a sequence of operations that may be performed by the inventory system 106 to confirm a travel booking for a travel inventory item managed by the inventory system 106. The inventory system 106 receives a booking request from a reservation system (block 202), where the booking request is for a travel inventory item managed by the inventory system 106. The inventory system 106 determines whether a travel inventory item requested in the booking request may be sold/rebooked for the booking request (block 204). For example, the inventory system 106 executing the sell/rebook module 132, origin/destination determination module 138, marriage module 140, and/or availability module 142 may determine whether any travel inventory items are available for booking for the booking request. Moreover, in some embodiments, the inventory system 106 executing the sell/rebook module 132, the corrective action module 148, BTL calculation module 144, and/or the booking activity accessor module 150 may determine that the reservation agent associated with the booking request has been blocked from making travel bookings due to repeated undesirable actions, as may be determined by analyzing a record corresponding to the reservation agent stored in the reservation agent data structure 154.

In response to determining that a travel inventory item may not be sold/rebooked (due to unavailability or other reasons) ("N" branch of block 204), the inventory system 106 may deny the booking request (block 206). In general, the inventory system 106 may communicate a response to the booking request to the reservation system 102 indicating that a travel inventory item cannot be booked for the booking request. Such booking request denial may be communicated from the reservation system 102 to the travel reservation device 104 utilized by the reservation agent.

In response to determining that a travel inventory item may be sold/rebooked ("Y" branch of block 204), the inventory system 106 executing the BTL calculation module 144 determines an expiration time based at least in part on the booking request (block 208). In some embodiments, the inventory system 106 executing the BTL calculation module 144 and booking activity accessor module 150 determines the expiration time based at least in part on booking activity data corresponding to the reservation agent associated with the booking request and/or the flight-date associated with the booking request, where the booking activity data may be stored in the reservation agent data structure 154 and/or flight-date data structure 156. Additionally, in some embodiments, the inventory system 106 may identify one or more related uncommitted bookings (block 207), and in such embodiments, the inventory system 106 executing the BTL calculation module 144 may also determine an updated expiration time for the related uncommitted bookings (block 208).In general, the related uncommitted bookings may correspond to uncommitted bookings for the same PNR. Therefore, in these embodiments, the expiration time for uncommitted bookings may be re-evaluated during the booking process for later received booking requests corresponding to the same PNR. For example, a first booking of for a PNR may be uncommitted and have associated therewith an original expiration time. In response to receiving a booking request for the PNR for selling a second booking, embodiments of the invention may identify the first booking as a related uncommitted booking, and embodiments of the invention may re-evaluate the original expiration time in response to the booking request for the second booking. In general, re-evaluation and adjustment of an expiration time (i.e., a BTL) for a first booking of a PNR responsive to selling a second booking may be referred to as origin-destination harmonization such that all bookings for a travel solution have the same expiration time, even if the bookings are sold through separate booking requests.

In some embodiments, the inventory system 106 may analyze the booking activity data to determine one or more booking statistics associated with the reservation agent and/or flight-date. For example, the inventory system 106 may determine a commit rate associated with the reservation agent, where the commit rate may indicate a rate at which travel bookings made for the reservation agent are committed. As another example, the inventory system 106 may determine a fraud rate associated with the reservation agent, where the fraud rate may indicate a rate at which the reservation agent appears to be engaging in undesired booking activity, which may be based at least in part on a rate at which travel bookings for the reservation agent are ignored, cancelled, and/or other such actions. Similarly, the inventory system 106 may determine a ratio of uncommitted travel bookings to total travel bookings for the flight-date of the booking request, where such ratio may be utilized to determine whether the inventory of travel inventory items of the inventory system 106 are being fraudulently manipulated. In embodiments of the invention, the inventory system 106 may determine the expiration time based at least in part on one or more determined booking statistics.

In addition, the inventory system 106 may analyze data corresponding to travel inventory items stored in the inventory database 152 to determine one or more availability factors associated with a travel inventory item requested in the booking request. For example, the inventory system 106 may determine a load factor associated with a requested flight-date. In embodiments of the invention, the inventory system 106 may determine the expiration time based at least in part on one or more determined availability factors for the requested travel inventory item.

The inventory system 106 confirms the travel booking for the travel inventory item (block 210), where the travel booking includes the determined expiration time. In general, the inventory system 106 may communicate the confirmed travel booking to the reservation system 102, and the reservation system 102 may communicate the confirmed travel booking to the travel reservation device of the reservation agent for further action (e.g., committing, canceling, ignoring, etc.). Consistent with embodiments of the invention, the travel booking includes the expiration time, and the travel reservation device 104 may output travel booking information including the expiration time upon receiving the confirmation on a display associated with the travel reservation device 104 such that the reservation agent is informed of the expiration time associated with the travel booking. Responsive to confirming the travel booking, the inventory system 106 updates the inventory of travel inventory items managed by the inventory system 106 to reflect the unavailability of the travel inventory item booked for the travel booking (block 212). In addition, the inventory system 106 updates one or more booking activity data structures based on the travel booking (block 214). The inventory system 106 executing the booking activity watcher module 146 and the booking activity accessor module 150 may store data corresponding to the travel booking in the reservation agent data structure 154 and/or the flight-date data structure 156. For example, the inventory system 106 stores data corresponding to the reservation agent of the travel booking that identifies the travel inventory item (e.g., a travel merchant, flight number, flight-date, etc.), the start/end time of the reservation session, the status of the travel booking (e.g., committed, ignored, uncommitted), and information on the action taken (e.g., book, cancel, etc.).

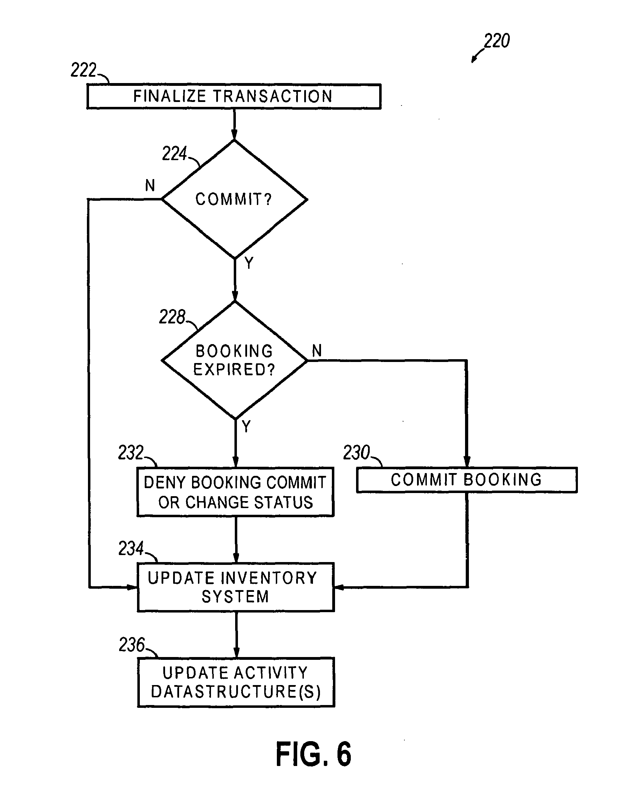

FIG. 6 provides a flowchart 220 that illustrates a sequence of operations that may be performed by the inventory system 106 consistent with embodiments of the invention to finalize a travel booking. The inventory system 106 receives a transaction message from the reservation system 102 indicating that the inventory session is being finalized (block 222) by committing the travel booking, canceling the travel booking, or ignoring the travel booking. If the finalization indicates that the travel booking is not being committed (i.e., ignored or canceled) ("N" branch of block 224), the inventory system updates the inventory of travel inventory items to reflect the availability of the previously booked travel inventory item (block 234).

If the received transaction message indicates that the reservation agent wishes to commit the travel booking ("Y" branch of block 224), the inventory system 106 determines whether the travel booking has expired (i.e., the included expiration time has elapsed) (block 228). In response to determining that the travel booking has not expired ("N" branch of block 228), the inventory system 106 commits the travel booking (block 230). The inventory system 106 may communicate a response to the reservation system 102 that indicates that the travel booking has been committed. In response to determining that the travel booking has expired ("Y" branch of block 228), the inventory system 106 denies the travel booking commit (block 232). In general, the inventory system 106 may communicate a commit denial to the reservation system 102 that indicates that the travel booking has not been committed due to expiration of the travel booking. The reservation system 102 in turn communicates the commit denial to the travel reservation device 104 or communicates a status change to the travel reservation device 104, and the travel reservation device 104 may output data to an associated display to inform the reservation agent that the commit transaction was denied due to expiration of the travel booking or that the status of the travel booking has changed.

After committing the travel booking (block 230), changing the status of the travel booking, or denying the request to commit the travel booking (block 232), the inventory system 106 updates the travel inventory items managed by the inventory system 106 based on whether the travel booking was committed or the commit request was denied (block 234). The inventory system 106 updates the reservation agent data structure 154 and/or the flight-date data structure 156 corresponding to the travel booking for the reservation agent and/or flight-date (block 236). The inventory system 106 updates the booking activity data corresponding to the reservation agent and/or the flight-date for the travel booking to indicate whether the travel booking was committed.

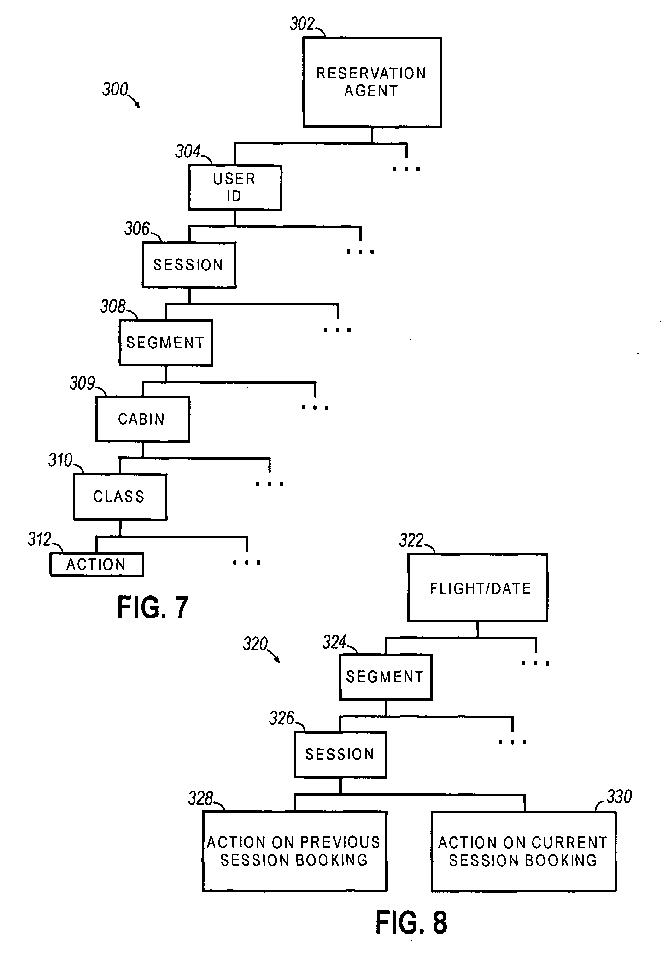

FIG. 7 provides a block diagram illustrating an example data tree 300 corresponding to a particular reservation agent that may be stored in the reservation agent data structure 154 of the inventory system 106. In some embodiments, the reservation agent data structure 154 may store collected booking activity data for each reservation agent utilizing the reservation system 102 and/or inventory systems 106 to make travel bookings in the format illustrated by the example data tree 300.

As shown, the collected booking activity data for a particular reservation agent may be organized in the data tree 300, where a root node of the data tree 300 stores an identifier associated with the particular reservation agent (i.e., a reservation agent node 302). For example the reservation agent node 302 may store an IATA number associated with the particular reservation agent. One or more nodes each storing a user identification 304 associated with a particular user may be linked to the reservation agent node 302. In general, each user identification node 304 may be linked to the reservation agent node 302 for each user associated with the reservation agent node 302. For example, a user identification node 304 may correspond to a travel agent, while the reservation agent node 302 may correspond to a travel agency of the travel agent.

One or more session nodes 306 may be linked to each user identification node 304, where each session node 306 stores information corresponding to each reservation session initiated by the user corresponding to the user identification node 304. For example, a session node may store information corresponding to a start/end time for a reservation session and/or a status of the session (e.g., committed, ignored, uncommitted/on-going, etc.). One or more segment nodes 308 may be linked to each session node 306, where each segment node corresponds to a travel inventory item booked for the corresponding session node 306. For example, a segment node may store information identifying a travel merchant for the segment, a travel inventory item identifier (e.g., a flight number), a flight-date, an origin/destination of the segment, and/or other such information. One or more cabin nodes 309 may be linked to each segment node, where each cabin node 309 indicates a particular cabin associated with the segment. One or more class nodes 310 may be linked to each cabin node 309, where each class node 310 indicates a particular booking class associated with the cabin. For example, a segment node 308 may correspond to a flight, a cabin node 309 may indicate a cabin on the flight, and the class node 310 may indicate if the travel booking was for first class, economy class, business class, etc.

One or more action nodes 312 may be linked to each class node 310. Each of the action nodes 312 stores information corresponding to the action performed for booking activity corresponding to the previous nodes 302-310. In general, each action node 312 stores information that identifies the type of action taken (e.g., sell, rebook, cancel, ignore, commit, etc.), the date/time of the action, the result of the action, travel item inventory availability before and after the action, gross availability, and/or other such information.

FIG. 8 provides a block diagram illustrating an example data tree 320 corresponding to a particular flight-date that may be stored in the flight-date data structure 156 of the inventory system 106. In some embodiments, the flight-date data structure 156 may store collected booking activity data for each flight-date in the format illustrated by the example data tree 320. As shown, the collected booking activity data for a flight-date may be organized in the data tree 320, where a root node of the data tree 320 stores data identifying the flight-date (i.e., a flight-date node 322). One or more segment nodes 324 may be linked to the flight-date node 322, where each segment node 324 stores information identifying the segment (e.g., segment date, origin/destination, travel merchant, etc.). One or more session nodes 326 may be linked to each segment node 324. Each session node 326 stores information identifying a reservation session that booked the segment identified in the segment node 324. Each session node 326 may store information corresponding to the start/stop time of the session, the status of the session (e.g., committed, ignored, canceled, uncommitted). Each session node 326 may be linked to a previous session booking action node 328, where the previous session booking action node 328 stores information corresponding to an action performed in the session for a previous travel booking, such as the type of action (e.g., rebook or cancel), the date/time of the action, the result of the action, the booking class associated with the action, and/or other such information. In addition, each session node 326 may be linked to a current session booking action node 330, where the current session booking action node 330 stores information corresponding to an action performed in the session for a travel booking created in the session, such as the type of action (e.g., create, rebook, and/or cancel), the date/time of the action, result of the action, booking class associated with the action, and/or other such information.

FIGS. 7 and 8 provide example block diagrams of data tree type logical structures of data that may be stored in the reservation agent data structure 154 and/or flight-date data structure 156. In general, the reservation agent data structure 154 and/or flight-date data structure may be stored in any type of memory, including for example, cache memory, RAM, and/or other types of memory. Moreover, the nodes of the data trees provided in FIG. 6 may be physically stored in one or more memory locations and/or types of memory. For example, the reservation agent data structure 154 and/or the flight-date data structure may store one or more data trees in a distributed cache architecture. Other logical data structures and/or architectures may be utilized consistent with embodiments of the invention.

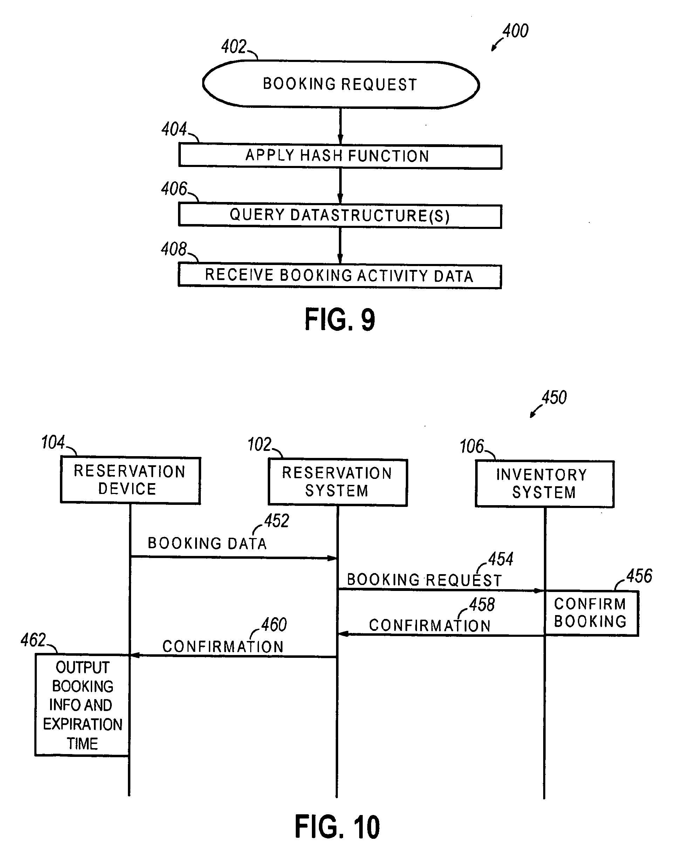

FIG. 9 provides a flowchart 400 illustrating a sequence of operations that may be performed by the inventory system consistent with embodiments of the invention to read and/or write data to the reservation agent data structure 154 and/or the flight-date data structure 156. In some embodiments of the invention, the reservation agent data structure 154 and/or the flight-date data structure may be logically structured with one or more data trees each corresponding to a particular reservation agent or flight-date. Moreover, the nodes of such data trees may be stored in a distributed cache architecture. In these embodiments, the inventory system 106 executing the booking activity accessor module 150 may apply a hash function to a received booking request to determine and query the storage location of relevant booking activity data.

The inventory system 106 receives the booking request (block 402), and applies a hash function (block 404) to query a cache location storing booking activity data relevant to the booking request (block 406), and the inventory system retrieves the relevant booking activity data (block 408). In general, a first hash function may be applied to the booking request to retrieve booking activity data corresponding to the reservation agent associated with the booking request. Similarly, a second hash function may be applied to the booking request to retrieve booking activity data corresponding to the flight-date associated with the booking request.

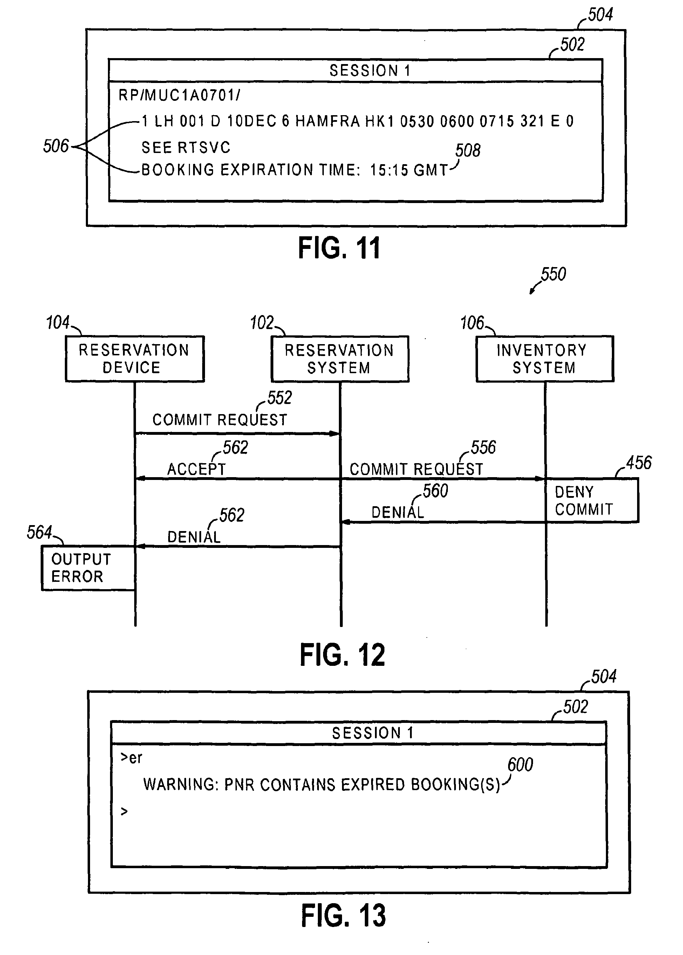

FIG. 10 provides an exemplary routine 450 that may be performed by the reservation system 102, the travel reservation device 104, and at least one inventory system 106 consistent with some embodiments of the invention to confirm a travel booking. A reservation agent may input a travel request, including creating and/or modifying a PNR for a travel customer, and booking data including the PNR and/or other information may be communicated from the reservation device 104 to the reservation system 102 (block 452). The reservation system 102 communicates a booking request to at least one inventory system 106 for at least one travel inventory item managed by the at least one travel inventory item (block 454). The at least one inventory system 106 may confirm the travel booking, where the travel booking includes an expiration time (block 456), and communicates a confirmation including information about the confirmed booking to the reservation system 102 (block 458), and in turn, the reservation system 102 communicates the confirmation to the reservation device 104 (block 460). The reservation device 104 may output data corresponding to the confirmed travel booking on an associated display, including the expiration time of the travel booking. FIG. 11 provides a diagrammatic view of an example command line interface 502 that may be output on a display 504 of the travel reservation device 104 for use by a reservation agent. As shown, in this example, the command line interface outputs data regarding the confirmed travel booking, including the determined expiration time 508.

FIG. 12 provides an exemplary routine 550 that may be performed by the reservation system 102, the travel reservation device 104, and at least one inventory system 106 consistent with some embodiments of the invention to deny an expired travel booking. As shown, the reservation agent may interface with the reservation device 104 to commit the travel booking, and the reservation device 104 communicates a commit request to the reservation system (block 552). The reservation system 102 may communicate an accept message to the reservation device indicating that the commit request has been accepted (block 554); however, the reservation system 102 also communicates the commit request to the inventory system 106 (block 556). As described herein, if the travel booking has expired, the inventory system may deny the commit request for the travel booking (block 558), and communicate a commit denial to the reservation system 102 (block 560), and in turn, the reservation system 102 may communicate the commit denial to the reservation device 104 (block 562). The reservation device 104 may output error data on an associated display that informs the reservation agent that the travel booking was not committed because the travel booking had expired (block 564). FIG. 13 provides a diagrammatic view of the example command line interface 502 that may be output on the display 504 of the travel reservation device 104 including data 600 informing the reservation agent that the travel booking could not be confirmed due to expiration of the travel booking.

The program code embodied in any of the applications described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

**Claims**

1. A method for booking travel inventory items, the method comprising:

   receiving a booking request for a type of travel inventory item managed by an inventory system;
   determining an expiration time based at least in part on the booking request;
   confirming a travel booking for one of the travel inventory items of the type of travel inventory item based on the booking request and the expiration time; and
   in response to confirming the travel booking, updating the inventory system to reflect the travel booking.

2. The method of claim 1, wherein the booking request identifies a reservation agent associated with the booking request, and determining the expiration time based at least in part on the booking request comprises:

   determining the expiration time based at least in part on the reservation agent.

3. The method of claim 2, wherein determining the expiration time based at least in part on the reservation agent comprises:

   accessing a data structure corresponding to the reservation agent to retrieve booking activity data corresponding to the reservation agent, and
   analyzing the booking activity data to determine at least one booking statistic associated with the reservation agent, wherein the expiration time is based at least in part on the at least one booking statistic associated with the reservation agent.

4. The method of any of the preceding claims, wherein the booking request identifies a flight-date associated with the booking request, and determining the expiration time based at least in part on the booking request comprises:

determining the expiration time based at least in part on the flight-date.

5. The method of claim 4, wherein determining the expiration time based at least in part on the flight-date comprises:

accessing a data structure corresponding to the flight-date to retrieve booking activity data corresponding to the flight-date, and
analyzing the booking activity data corresponding to the flight-date to determine at least one booking statistic associated with the flight-date, wherein the expiration time is based at least in part on the at least one booking statistic associated with the flight-date.

6. The method of any of the preceding claims, further comprising:

receiving a commit request for the travel booking at the inventory system; and
determining whether the travel booking has expired based on the expiration time.

7. The method of claim 6, further comprising:

committing the travel booking responsive to determining that the travel booking has not expired.

8. The method of claim 6, further comprising:

denying the commit request for the travel booking responsive to determining that the travel booking has expired.

9. The method of claim 8, further comprising:

updating the type of travel inventory item managed by the inventory system responsive to denying the commit request for the travel booking.

10. The method of any of the preceding claims, wherein the booking request identifies a reservation agent associated with the booking request, and further comprising:

collecting booking activity data for the reservation agent based at least in part on the travel booking; and
storing the booking activity data in a data structure corresponding to the reservation agent.

11. The method of any of the preceding claims, wherein the booking request identifies a flight-date associated with the booking request, and further comprising:

collecting booking activity data for the flight-date based at least in part on the travel booking; and
storing the booking activity data in a data structure corresponding to the flight-date.

12. The method of any of the preceding claims, further comprising:

in response to receiving the booking request for the type of travel inventory item, identifying at least one related uncommitted travel booking having an expiration time associated therewith; and
re-evaluating the expiration time of the at least one related uncommitted travel booking based at least in part on the booking request to thereby adjust the expiration time of the at least one related uncommitted travel booking.

13. A computer readable storage medium having program code stored which is configured upon execution by at least one processor to perform the method of any of claims 1-12.

14. An inventory system for booking travel inventory items, the inventory system comprising:

a processor; and
program code configured to be executed by the processor to cause the processor to receive a booking request for a type of travel inventory item managed by the inventory system, determine an expiration time based at least in part on the booking request, confirm a travel booking for one of the travel inventory items of the type of travel inventory item based on the booking request and the expiration time, and update the inventory system to reflect the travel booking in response to confirming the travel booking.

15. The inventory system of claim 14, further comprising program code configured upon execution by the at least one processor to perform the method of any of claims 2 to 12.

**FIG. 1**

_106

| MEMORY | |
|---|---|
| | CPU ~122 |
| OS | |
| SELL/REBOOK MODULE | USER I/F ~126 |
| EOT MODULE | NETWORK I/F ~128 |
| IGNORE MODULE | ~124 |
| ORIGIN/DESTINATION DETERMINATION MODULE | |
| MARRIAGE MODULE | |
| AVAILABILITY MODULE | |
| BTL CALCULATION MODULE | |
| BOOKING ACTIVITY WATCHER MODULE | |
| CORRECTIVE ACTION MODULE | |
| BOOKING ACTIVITY ACCESSOR MODULE | |
| INVENTORY DATABASE | |
| RESERVATION AGENT DATA STRUCTURE | |
| FLIGHT/DATE DATA STRUCTURE | |

130
132
134
136
138
140
142
144
146
148
150
152
154
156

**FIG. 2**

*162* $y_x$

*160*

1

0.66

0

0   5          15          INSISTENCY VALUE

*164*

## FIG. 3A

*172* $y_x$

*168*

1

0

0          15          LOAD FACTOR$^{(x)}$

*170*

## FIG. 3B

*182* $y_a$ 1    *182*    *184*

*176*

$y_b$    *186*  *188*

0

0          $x_a$      $x_b$  100   LOAD FACTOR$^{(x)}$

*180*

## FIG. 3C

104

MEMORY
192

RESERVATION
APPLICATION
198

CPU
190

USER
I/F
194

NETWORK
I/F
196

## FIG. 4

200

202  RECEIVE BOOKING REQUEST

204  SELL/REBOOK INVENTORY ITEM?  N  206  DENY BOOKING REQUEST

Y

207  IDENTIFY OTHER UNCOMMITTED BOOKINGS

208  DETERMINE EXPIRATION TIME

210  CONFIRM TRAVEL BOOKING

212  UPDATE INVENTORY SYSTEM

214  UPDATE ACTIVITY DATASTRUCTURE(S)

## FIG. 5

220

222

FINALIZE TRANSACTION

224

COMMIT?

N

Y

228

BOOKING
EXPIRED?

N

Y

232

DENY BOOKING COMMIT
OR CHANGE STATUS

230

COMMIT BOOKING

234

UPDATE INVENTORY
SYSTEM

236

UPDATE ACTIVITY
DATASTRUCTURE(S)

**FIG. 6**

*302*

RESERVATION
AGENT

*300*

*304*

USER
ID

. . .

*306*

SESSION

. . .

*308*

SEGMENT

. . .

*309*

CABIN

. . .

*310*

CLASS

. . .

*312*

ACTION

. . .

## FIG. 7

*322*

FLIGHT/DATE

*320*

*324*

. . .

SEGMENT

*326*

. . .

SESSION

*328*

ACTION ON PREVIOUS
SESSION BOOKING

*330*

ACTION ON CURRENT
SESSION BOOKING

## FIG. 8

**FIG. 9**

400

402 BOOKING REQUEST

404 APPLY HASH FUNCTION

406 QUERY DATASTRUCTURE(S)

408 RECEIVE BOOKING ACTIVITY DATA

**FIG. 10**

450

104 RESERVATION DEVICE

102 RESERVATION SYSTEM

106 INVENTORY SYSTEM

452 BOOKING DATA

454 BOOKING REQUEST

456 CONFIRM BOOKING

458 CONFIRMATION

460 CONFIRMATION

462 OUTPUT BOOKING INFO AND EXPIRATION TIME

```
┌──────────────────────────────────────────────────────────┐ 504
│  ┌────────────────────────────────────────────────────┐ 502
│  │                    SESSION 1                        │
│  ├────────────────────────────────────────────────────┤
│  │ RP/MUC1A0701/                                       │
│  │   1 LH 001 D 10DEC 6 HAMFRA HK1 0530 0600 0715 321 E 0 │
│  │     SEE RTSVC                          508          │
│  │   BOOKING EXPIRATION TIME:  15:15 GMT               │
│  │                                                     │
│  └────────────────────────────────────────────────────┘
└──────────────────────────────────────────────────────────┘
```
506

## FIG. 11

## FIG. 12

```
┌──────────────────────────────────────────────────────────┐ 504
│  ┌────────────────────────────────────────────────────┐ 502
│  │                    SESSION 1                        │
│  ├────────────────────────────────────────────────────┤
│  │ >er                                       600       │
│  │      WARNING: PNR CONTAINS EXPIRED BOOKING(S)       │
│  │ >                                                   │
│  │                                                     │
│  └────────────────────────────────────────────────────┘
└──────────────────────────────────────────────────────────┘
```

## FIG. 13

Europäisches
Patentamt

European
Patent Office

Office européen
des brevets

# EUROPEAN SEARCH REPORT

Application Number

EP 13 29 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wikipedia: "Airline reservations system", INTERNET ARTICLE, 12 June 2013 (2013-06-12), XP055085440, Retrieved from the Internet: URL:http://en.wikipedia.org/w/index.php?title=Airline_reservations_system&oldid=559491045 [retrieved on 2013-10-25] * the whole document * | 1-15 | INV. G06Q10/02 |
| X | EP 2 500 849 A1 (AMADEUS SAS [FR]) 19 September 2012 (2012-09-19) * figures 1,2 * | 1-15 | |
| X | US 2008/262878 A1 (WEBBY RICHARD [US] ET AL) 23 October 2008 (2008-10-23) * figure 1 * | 1-15 | |
| A | Wikipedia: "Hash function", INTERNET ARTICLE, 18 June 2013 (2013-06-18), XP055085441, Retrieved from the Internet: URL:http://en.wikipedia.org/w/index.php?title=Hash_function&oldid=560496601 [retrieved on 2013-10-25] * the whole document * | 1-15 | TECHNICAL FIELDS SEARCHED (IPC)  G06Q |

The present search report has been drawn up for all claims

| Place of search | Date of completion of the search | Examiner |
|---|---|---|
| Munich | 28 October 2013 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 13 29 0146

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2013

| Patent document cited in search report | | | Publication date | Patent family member(s) | | | Publication date |
|---|---|---|---|---|---|---|---|
| EP | 2500849 | A1 | 19-09-2012 | AU | 2012230579 | A1 | 02-05-2013 |
| | | | | CA | 2824373 | A1 | 27-09-2012 |
| | | | | EP | 2500849 | A1 | 19-09-2012 |
| | | | | SG | 192158 | A1 | 30-08-2013 |
| | | | | US | 2012239442 | A1 | 20-09-2012 |
| | | | | WO | 2012126747 | A1 | 27-09-2012 |
| US | 2008262878 | A1 | 23-10-2008 | US | 2008262878 | A1 | 23-10-2008 |
| | | | | WO | 2008131068 | A1 | 30-10-2008 |

EPO FORM P0459

For more details about this annex : see Official Journal of the European Patent Office, No. 12/82